# EUROPEAN PATENT SPECIFICATION

(11) **EP 0 525 965 B1**
(45) Date of publication and mention of the grant of the patent: **18.10.1995**
(21) Application number: 92305589.1
(22) Date of filing: 18.06.1992
(51) Int. Cl.: B60T 15/04

(54) **Fluid pressure control valve**
Druckregelventil
Soupape de régulation de pression

(30) Priority: 19.06.1991 GB 9113205
(43) Date of publication of application: 03.02.1993
(73) Proprietor: Knorr-Bremse Systems for Commercial Vehicles Limited, Kingswood, Bristol BS15 2NL (GB)
(72) Inventor: Thompson, Paul David, Bath, Avon BS2 3HS (GB)
(74) Representative: Hogg, Jeffery Keith

(56) References cited:
- DE-A- 2 658 206
- DE-A- 3 830 105
- US-A- 3 580 646

## Description

This invention relates to fluid pressure control valve assemblies and relates especially but not exclusively to valves for controlling compressed air pressure in a vehicle compressed air braking system.

In compressed air braking systems it is usual to employ fluid pressure control valves for regulating the pressures in several brake circuits under the control of a driver by hand or foot operation. Normally, service brake circuits are controlled by a valve assembly operable by a driver's foot whereas secondary or parking brake circuits are operated by a conveniently positioned hand-operable control valve. A typical such valve comprises a pressure responsive piston moveable in a cylinder under the influence of delivered pressure acting in opposition to a graduating spring. The piston has two seals to permit sealing connection with a supply port and carries within it a double valve element operable by a plunger to connect a delivery port to the supply port pressure or a vent, the delivered pressure thereby being dependent upon the position of the plunger in the housing. A typical such control valve is an 'S4' valve manufactured by applicants and such valves can be arranged as inverse or upright valves depending, for example, upon whether spring brakes or normal brake chambers are to be operated thereby. One such valve is described in Applicants Technical Pamphlet No. 6/007 issued July 1982.

In such a valve assembly, because the pressure responsive piston is required to carry the double valve element within it it has been found necessary to construct the piston in two parts to permit insertion of the valve element. Furthermore because the piston is subject to supply port pressure the parts need to be very robust and joined by secure means such as screwing and locking to prevent any possibility of separation throughout the useful service life of the valve assembly.

Several other fluid pressure control valves are described in DE-A-3830105, U S 3 580 646 and DE-A-2658206.

In each of these a double valve member is carried in the housing to be movable towards or away from an inlet valve seat by the action of a moving vent valve seat carried by a pressure responsive member which is acted upon by delivered pressure. In each of these arrangements it is again seen to be necessary to contain the double valve member in an enclosure which is subject to supply pressure.

The object of the present invention is to provide an improved fluid pressure control valve wherein a simpler construction may be used.

According to the present invention there is provided a fluid pressure control valve assembly having a housing having a fluid pressure input port a fluid pressure delivery port and an exhaust port a control member for actuating a double valve to connect said delivery port alternatively to said input port or to the exhaust port, a fluid pressure responsive movable member movable in said housing subject on one side to the fluid pressure at the delivery port acting thereon in opposition to a graduating force and characterised in that said double valve comprises a double valve member engageable alternatively or severally with an inlet valve seat carried by the control member and a vent valve seat carried by the pressure responsive member and said control member being slideable within the double valve member.

In a preferred embodiment the double valve member comprises a generally tubular valve member having a radially inwardly projecting annulus sealingly axially engageable with an annular part of the control member to close the said connection to the input port and a further annulus sealingly engageable with pressure responsive member said control member extending at least partially through said generally tubular valve member and said valve member having a transverse fluid flow passage therethrough from between said annuli.

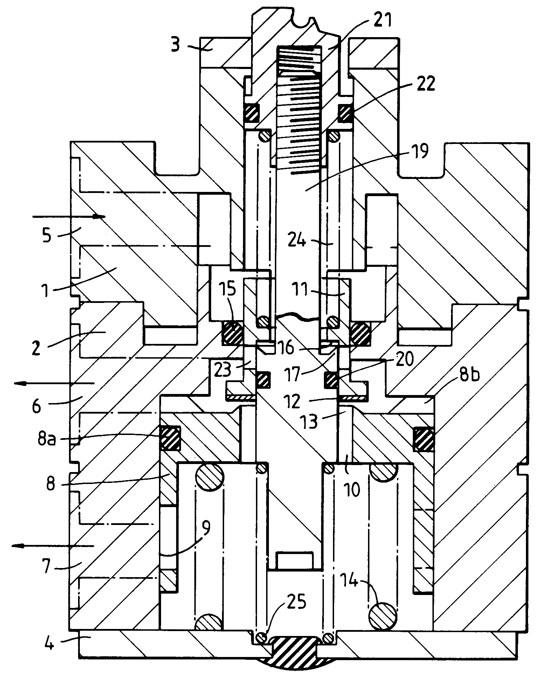

In order that the invention may be more clearly understood and readily carried into effect the same will be more fully described by way of example with reference to the accompanying drawing which illustrates one embodiment in sectional diagrammatical form.

Referring to the drawing, the valve assembly comprises a housing formed by two castings 1 and 2 with end covers 3 and 4. The housing has a compressed air supply port 5 for connection to a storage reservoir, a delivery port 6 for connection to the respective brake circuit and an exhaust port 7 normally communicating with atmosphere. The housing is provided with a cylindrical bore 9 within which a pressure responsive member comprising a piston 8 with an annular seal 8a is sealingly slideable. Projection 8b of the piston provides stopping abutment with the housing to limit upward travel. The piston 8 has a central aperture 10 closable by a generally cylindrical double valve member 11 having a face 12 engageable with an annular seat 13 around the upper periphery of the aperture 10. The valve member is thereby such as to seal the delivery port 6 from atmosphere, downward movement of the piston being opposed by the action of a graduating spring 14. The tubular valve member 11 is sealingly axially moveable in a seal 15 captive in the housing and is provided with a radially inwardly extending annular face 16 engageable with a further inlet valve seat 17 formed on an internally slideable rod-like control member 19.

The internally slideable rod-like control member 19 moves within the tubular double valve member 11 and carries an annular seal 20. This rod-like control member 19 extends upwards and is adjustable screwed into an upper plunger 21 with a further annular seal 22 which is of substantially the same external diameter as the seating diameter of valve member 11 which slides in seal 15. The region between plunger 21 and valve seat 17 is connected to the supply port 5 and a passage 23 is provided in the wall of 11, between seat 16 and seal 20, to increase supply pressure to the delivery port from port 5 when seat 16 is uncovered. Light captive springs 24 and 25 are included, respectively to urge valve member 11 towards seat 16 and to urge the control member 19 and plunger towards a control cam (not shown).

In operation, the positions of the components of the assembly shown in the drawing are such as to provide zero output pressure at the delivery port 6 since by engagement of projections 8b with the housing, the piston 8 is in its uppermost position in cylinder bore 9 and face 12 of the double valve element 11 is unseated from seat 13. Downward movement of the plunger 21 by operation of the cam (not shown) carries with it the control member 19 and the double valve element such that face 12 now engages seat 13, followed by separation of seat 17 from face 16, permitting supply of air pressure to flow from port 5 via the unseated inlet valve 16, 17 and passage 23 to the delivery port 6. The rise of pressure at the delivery port appears in turn above the piston 8 urging same downwards against the action of the graduating spring 14. The piston then acts to cause the double valve to lap. i.e. with inlet valve 16, 17 and exhaust valve 12, 13 both closed, at a delivery port pressure set by the position of plunger 21. The maximum possible available output pressure is substantially equal of course to the available supply pressure and is substantially fully graduable assuming that the graduating spring is such as to accommodate such a range. Upward movement of plunger 21 permits the exhaust valve 12, 13 to unseat allowing some delivery pressure to be vented to port 7 down to a lower pressure at which the latter valve reclosed by virtue of the resultant upward movement of piston 8.

By virtue of the design of the above described assembly being such that the control member is movable within the double valve member the double valve member being engageable with an inlet valve seat carried by the control member and an exhaust valve seat carried by the pressure responsive member it is not necessary to arrange the double valve element within a two part piston or to provide such piston with two seals.

Whilst the above described embodiment of the invention has a control member 19 passing through both the double valve member 11 and the pressure responsive member, the described embodiment may be modified such that the control member does not extend through the pressure responsive member.

In a further variant, the cam or other actuating mechanism for the control member 19 may be located to act on the control member from the end presently occupied by the closure plate 4. In that case, the control member may not necessarily pass through double valve member 11. The only requirement being that the port 5 can still communicate with the passage 23 only via the valve seat 17 carried by the control member. In such a variant, since the lower end of the control member 19 is at atmospheric pressure the need for a further seal such as seal 22 may be avoided.

## Claims

1. A fluid pressure control valve assembly having a housing (1,2,3,4) having a fluid pressure input port (5) a fluid pressure delivery port (6) and an exhaust port (7) a control member (19) for actuating a double valve (12,13,16,17) to connect said delivery port (6) alternatively to said input port (5) or to the exhaust port (7), a fluid pressure responsive movable member (8) movable in said housing subject on one side to the fluid pressure at the delivery port acting thereon in opposition to a graduating force and characterised in that said double valve comprises a double valve member (11) engageable alternatively or severally with an inlet valve seat (17) carried by the control member (19) and a vent valve seat (13) carried by the pressure responsive member (8) and said control member (19) being slideable within the double valve member (11).

2. A fluid pressure control valve assembly as claimed in claim 1 characterised in that said control member is sealingly slideable within the valve member via a seal (20) which separates the delivery port (6) from the exhaust port.

3. A fluid pressure control valve assembly as claimed in claim 2, characterised in that the double valve member (11) is generally cylindrical and is sealingly movable via a further seal (15), relative to the housing.

4. A fluid pressure control valve assembly as claimed in claim 3, characterised in that said further seal (15) presents a diameter which is substantially equal to the diameter of the vent valve seat (13).

5. A fluid pressure control valve assembly as claimed in claim 1, 2, 3 or 4 characterised in that said graduating force is provided by a graduating spring (14) under compression between the pressure responsive member (8) and a part (4) of the housing.

6. A fluid pressure control valve assembly as claimed in any preceding claim characterised in that said control member (19) passes through said pressure responsive member (8).

7. A fluid pressure control valve assembly as claimed in any preceding claim characterised by a spring (24) continuously urging double valve member (11) towards the seat (17) carried by the control member.

8. A fluid pressure control valve assembly as claimed in claim 7 characterised by a spring (25) acting on the control member continuously urging the seat (17) carried by the control member towards the double valve and in a sense to unseat it from the pressure responsive member.

## Patentansprüche

1. Ventilanordnung zur Steuerung eines Flüssigkeitsdrucks, umfassend ein Gehäuse (1, 2, 3, 4) mit einer Eingangsöffnung (5) für den Flüssigkeitsdruck, einer Abgabeöffnung (6) für den Flüssigkeitsdruck und einer Auslaßöffnung (7), mit einem Steuerglied (19) zum Betätigen eines Doppelventils (12, 13, 16, 17), um die Abgabeöffnung (6) entweder mit der Eingangsöffnung (5) oder mit der Auslaßöffnung (7) zu verbinden, mit einem auf den Flüssigkeitsdruck ansprechenden, bewegbaren Teil (8), das in dem Gehäuse bewegbar ist, indem es auf einer Seite dem an der Abgabeöffnung anliegenden Flüssigkeitsdruck ausgesetzt ist und andererseits einer gradierenden Kraft,
**dadurch gekennzeichnet**, daß das Doppelventil ein Doppelventilelement (11) umfaßt, welches alternativ oder getrennt mit einem an dem Steuerglied (19) angeordneten Einlaßventilsitz (17) und mit einem an dem auf Druck ansprechenden Teil (8) angeordneten Anschlußventilsitz (13) in Eingriff bringbar ist, und daß das Steuerglied (19) verschiebbar in dem Doppelventilelement (11) gelagert ist.

2. Ventilanordnung zur Steuerung eines Flüssigkeitsdrucks nach Anspruch 1, dadurch gekennzeichnet, daß das Steuerglied abdichtend in dem Ventilelement verschiebbar ist über eine Dichtung (20), die die Abgabeöffnung (6) von der Auslaßöffnung (7) trennt.

3. Ventilanordnung zur Steuerung eines Flüssigkeitsdrucks nach Anspruch 2, dadurch gekennzeichnet, daß das Doppelventilelement (11) im wesentlichen zylindrisch ausgebildet ist und über eine weitere Dichtung (15) abdichtend relativ zu dem Gehäuse bewegbar ist.

4. Ventilanordnung zur Steuerung eines Flüssigkeitsdrucks nach Anspruch 3, dadurch gekennzeichnet, daß die weitere Dichtung (15) einen Durchmesser aufweist, der im wesentlichen dem Durchmesser des Abschlußventilsitzes (13) entspricht.

5. Ventilanordnung zur Steuerung eines Flüssigkeitsdrucks nach einem der Ansprüche 1 bis 4, dadurch gekennzeichnet, daß die gradierende Kraft durch eine unter Kompression stehende gradierende Feder (14) vermittelt wird, die zwischen dem auf Druck ansprechenden Teil (8) und einem Teil (4) des Gehäuses angeordnet ist.

6. Ventilanordnung zur Steuerung eines Flüssigkeitsdrucks nach einem der vorhergehenden Ansprüche, dadurch gekennzeichnet, daß das Steuerglied (19) durch das auf Druck ansprechende Teil (8) geführt ist.

7. Ventilanordnung zur Steuerung eines Flüssigkeitsdrucks nach einem der vorhergehenden Ansprüche, dadurch gekennzeichnet, daß eine Feder 24 vorgesehen ist, die das Doppelventilelement (11) kontinuierlich gegen den an dem Steuerglied angeordneten Sitz (17) drückt.

8. Ventilanordnung zur Steuerung eines Flüssigkeitsdrucks nach Anspruch 7, dadurch gekennzeichnet, daß eine Feder (25) vorgesehen ist, die auf das Steuerglied wirkt und den an dem Steuerglied angeordneten Sitz (17) kontinuierlich gegen das Doppelventil drückt, so daß der Sitz des Steuerglieds auf dem auf Druck ansprechenden Teil (8) gelöst wird.

## Revendications

1. Ensemble de soupape de commande de pression de fluide comprenant un boîtier (1, 2, 3,4) comportant un orifice d'entrée (5) de pression de fluide, un orifice de refoulement (6) de pression de fluide et un orifice d'échappement (7), un organe de commande (19) pour l'actionnement d'une soupape double (12, 13, 16, 17) de façon à relier ledit orifice de refoulement (6) alternativement audit orifice d'entrée (5) ou audit orifice d'échappement (7), un organe (8) mobile répondant à la pression de fluide se déplaçant dans ledit boîtier en étant soumis d'un côté à la pression de fluide de l'orifice de refoulement agissant sur ledit organe en opposition à une force de calibrage, ledit ensemble étant caractérisé en ce que ladite soupape double comprend un organe de soupape double (11) pouvant s'engager alternativement ou séparément avec un siège (17) de soupape d'admission porté par l'organe (19) de commande et un siège (13) de soupape d'évent porté par l'organe (8) répondant à la pression et ledit organe (19) de commande pouvant coulisser à l'intérieur de l'organe (11) de soupape double.

2. Ensemble de soupape de commande de pression de fluide selon la revendication 1, caractérisé en ce que ledit organe de commande coulisse de façon étanche à l'intérieur de l'organe de soupape à travers un joint (20) qui sépare l'orifice de refoulement (6) de l'orifice d'échappement.

3. Ensemble de soupape de commande de pression de fluide selon la revendication 2, caractérisé en ce que l'organe de soupape double (11) est de forme générale cylindrique et est mobile en étanchéité à travers un autre joint (15) en relation avec le boîtier.

4. Ensemble de soupape de commande de pression de fluide selon la revendication 3, caractérisé en ce que ledit autre joint (15) présente un diamètre qui est sensiblement égal au diamètre du siège (13) de soupape d'évent.

5. Ensemble de soupape de commande de pression de fluide selon la revendication 1, 2, 3 ou 4, caractérisé en ce que ladite force de calibrage est fournie par un ressort de calibrage (14) maintenu sous compression entre l'organe répondant à la pression (8) et une partie (4) du boîtier.

6. Ensemble de soupape de commande de pression de fluide selon l'une quelconque des revendications précédentes, caractérisé en ce que ledit organe (19) de commande traverse ledit organe (8) répondant à la pression.

7. Ensemble de soupape de commande de pression de fluide selon l'une quelconque des revendications précédentes, caractérisé par un ressort (24) pressant de façon continue l'organe de soupape double (11) en direction du siège (17) porté par l'organe de commande.

8. Ensemble de soupape de commande de pression de fluide selon la revendication (7), caractérisé par un ressort (25) agissant sur l'organe de commande pressant de façon continue le siège (17) porté par l'organe de commande en direction de la soupape double et dans le sens qui le dégage de l'organe répondant à la pression.
